# EUROPÄISCHE PATENTSCHRIFT

(11) **EP 0 945 717 B1**
(45) Veröffentlichungstag und Bekanntmachung des Hinweises auf die Patenterteilung: **11.06.2003**
(21) Anmeldenummer: 99105583.1
(22) Anmeldetag: 16.03.1999
(51) Int. Cl.: G01G 21/00, G01G 21/24

(54) **Elastisch verformbares Bauteil und Verfahren zu seiner Herstellung**
Elastically deformable element and method for its manufacture
Elément déformable élastiquement et son procédé de fabrication

(30) Priorität: 26.03.1998 DE 19813459
(43) Veröffentlichungstag der Anmeldung: 29.09.1999
(73) Patentinhaber: Mettler-Toledo GmbH, 8606 Greifensee (CH)
(72) Erfinder: Tellenbach, Jean-Maurice Dr., 8442 Hettlingen (CH)
(74) Vertreter: Ulrich, Jürg

(56) Entgegenhaltungen:
- PATENT ABSTRACTS OF JAPAN vol. 008, no. 246 (C-251), 10. November 1984 (1984-11-10) & JP 59 126758 A (KUBOTA TEKKO KK), 21. Juli 1984 (1984-07-21)
- PATENT ABSTRACTS OF JAPAN vol. 017, no. 609 (P-1640), 9. November 1993 (1993-11-09) & JP 05 187934 A (YASKAWA ELECTRIC CORP), 27. Juli 1993 (1993-07-27)
- PATENT ABSTRACTS OF JAPAN vol. 098, no. 009, 31. Juli 1998 (1998-07-31) & JP 10 090093 A (NAGANO KEIKI SEISAKUSHO LTD), 10. April 1998 (1998-04-10)
- C.W. WEGST: " Stahlschlüssel"1989, Seite 282,287 XP002104864 Verlag Stahlschlüssel Wegst GmbH D-7142 Marbach

## Beschreibung

Die Erfindung liegt auf dem Gebiet des Einsatzes und der Behandlung legierten Stahls im Gerätebau und betrifft ein elastisch verformbares Bauteil für eine Messeinrichtung, insbesondere ein Präzisionsgerät, dessen Herstellung und dessen Verwendung (siehe JP-A-59 126 758).

Im Gerätebau werden an gewisse Konstruktionselemente hohe Anforderungen bezüglich ihrer mechanischen Eigenschaften gestellt. Typische Vertreter solcher Elemente sind zum Beispiel Lastzellen genauer Waagen, mit ihren Lenkvorrichtungen, Koppel- und Lagerelementen, oder Kraft-Weg-Wandler mit zugehörigem Sensor. Bei letzteren ist der lineare Zusammenhang zwischen Kraft und Verformungsweg von Bedeutung, wobei reproduzierbare elastische Eigenschaften angestrebt werden. Bei allen Elementen sind geringe Anelastizität, wenig Kriechen und kleine (mechanische) Hysterese gefragt. Ausserdem sollen die Elemente korrosionsfest und vorzugsweise nicht magnetisch sein.

Zur Zeit werden für Bauteile der oben genannten Art in hoch beanspruchten Präzisionsgeräten, zum Beispiel für Hochleistungs-Lastzellen genauer Waagen, vorwiegend martensitische, ausscheidungsgehärtete, nicht rostende Stähle verwendet. Üblicherweise werden sie lösungsgeglüht und bei Temperaturen zwischen 450 und 550°C gealtert. Beispiele dafür sind Typen, die unter den Bezeichnungen 17-7PH, 17-4PH, 15-5PH oder 13-8Mo gehandelt werden. Sie sind nahezu kriechfrei, weisen jedoch eine grosse Hysterese auf: bei kurzzeitiger Be- und anschliessender Entlastung ist zwar praktisch keine bleibende Deformation vorhanden, doch verläuft das Last-Verformungs-Diagramm bei ansteigender Belastung anders als bei der abfallenden Belastung. Je nach Los und Wärmebehandlung sowie Temperatur und Last im Einsatz zeigen Bauteile aus solchen Materialien eine mechanische Hysterese von 1·10⁻⁴ bis 5·10⁻⁴. Obwohl diese Hysterese mit geeigneten Massnahmen reduziert und/oder teilweise kompensiert werden kann, lässt sie sich nie zum Verschwinden bringen und bleibt ein störender Effekt. Für die Überwindung dieses unerwünschten Effekts existieren im Stand der Technik zahlreiche Lösungen. Sie reichen von der rein rechnerischen Kompensation (US-A-4691290) über jene durch die Formgebung der Befestigung (DE-U-29612167) oder durch den Sensor bis hin zu speziellen Legierungen und Beeinflussung von Gefüge oder Zellengeometrie, welche die Blochwandreibung verhindern (JP-A-59126760, DE-A-4034629). Diese Massnahmen sind entweder aufwendig oder weisen ungenügende Reproduzierbarkeit auf oder verschlechtern gewisse elastische Eigenschaften. Eine andere Möglichkeit, Hysteresefreiheit zu erreichen, ist der Einsatz austenitischer Stähle. Die erhältlichen austenitischen Stähle sind jedoch bezüglich Korrosionsfreiheit optimiert und haben ungenügende elastische Eigenschaften; sie eignen sich nach einer Härtung durch Kaltverformung als Federn, wegen des hohen Kriechanteils jedoch nicht als Wandler. Neuere austenitische Stähle sind für höhere Streckspannungen bei hohen Temperaturen ausgelegt, ihr Kriechverhalten ist aber ebenfalls schlecht. Ein weiteres Problem ergibt sich aus den magnetischen Eigenschaften der Stähle. Insbesondere bei Waagen, aber auch bei anderen Präzisionsgeräten, wo Kräfte (oder Wege über Krafteinwirkung) zu messen sind, darf ein allenfalls vorhandenes Magnetfeld die Kraftmessung nicht beeinflussen. Deshalb besteht die zusätzliche Forderung an die konstruktiven Elemente für ein Präzisionsgerät, dass sie nicht magnetisch sein müssen.

Es besteht also die Aufgabe, eine korrosionsbeständige, nicht magnetische Vorrichtung zu schaffen, die sich unter Last linear zu dieser nahezu vollständig reversibel und hysteresefrei verformt.

Die Aufgabe wird durch ein elastisch verformbares Bauteil gemäss Patentanspruch 1 gelöst, das sich nach einem Verfahren gemäss Patentanspruch 15 herstellen lässt. Das Bauteil ist von Bedeutung für die Anwendung in Präzisionsmessgeräten, wie etwa Wagen hoher Auflösung. Das Bauteil kann dabei selber unmittelbar zur Messwertbildung beitragen - in Wandlern, Sensoren oder ähnlichem, wobei der Zusammenhang von Spannungen und Dehnungen beziehungsweise Lasten und Auslenkungen benützt wird - oder in Lagern, Lenkern, Koppeln oder ähnlichem Verwendung finden.

Unter Verwendung derartiger Bauteile lässt sich weiter die Aufgabe lösen, Messwandler, mechanische Lenkungsvorrichtungen, Koppel- und Lagerelemente herzustellen, wie dies aus den Patentansprüchen 10 bis 13 hervorgeht.

Das elastisch verformbare Bauteil der Erfindung basiert auf einer Metallegierung, deren Gefüge im wesentlichen austenitisch ist. Bevorzugt wird legierter Stahl verwendet. Der Anteil an Ferrit und/oder Martensit ist auf unter zwei Prozent beschränkt, was gewährleistet, dass der Stahl nicht magnetisch ist. Ein Legierungsanteil Chrom von mehr als 11 Gewichtsprozenten sorgt für die notwendige Korrosionsbeständigkeit. Das Kristallgefüge weist eine Nanostruktur auf, welche die Versetzungen des Gefüges blockiert, was kleine Hysterese, Anelastizität und wenig Kriechen zur Folge hat.

Die spezielle Kristallstruktur ergibt sich aus einem Härtungsprozess, der ein Kalthärten beim Formen des Bauteils und ein Altern (thermisches Aushärten, Ausscheidungshärten) des geformten Bauteils umfasst.

Ausgangsmaterial für die Herstellung des elastisch verformbaren Bauteils nach dem erfinderischen Verfahren ist eine zwischengitteratomhaltige, nicht rostende, austenitische Metallegierung, die lösungsgeglüht und abgeschreckt wurde. In Frage kommen Eisen- oder Nickellegierungen mit genügend hohem Anteil an Chrom, allenfalls ergänzt durch weitere Elemente zur Erhöhung der Korrosionsfestigkeit, und einem genügenden Anteil an Stickstoff oder anderer geeigneter Elemente für die Bereitstellung der Zwischengitteratome. Daraus wird nach gängigen Methoden der Metallverarbeitung ein Bauteil hergestellt. Das Formen des Bauteils kann in einem oder mehreren Arbeitsgängen erfolgen. Zum Herstellen des Bauteils gehört eine Kaltverformung oder eine mechanische Oberflächenbehandlung oder beides zumindest an ausgewählten Stellen. Diese Behandlung führt zur Erhöhung der Versetzungsdichte an den bearbeiteten Stellen und härtet so das Material. Eine anschliessende sogenannte Alterung - fortan als thermische Aushärtung bezeichnet - des ganzen Bauteils zwischen 200 und 700°C bewirkt eine Blockierung der Versetzungen, was sich positiv auf die elastischen Eigenschaften auswirkt.

Besonders vorteilhafte Eigenschaften ergeben sich lokal, wenn beim Formen bis in eine Tiefe von mindestens 50 µm eine plastische Deformation von mehr als zehn Prozent resultiert. Dünnstellen am Bauteil, wie sie für Koppel- oder Lagerelemente vorkommen, erhalten so nach der anschliessenden thermischen Aushärtung hervorragende Elastizität.

Das thermische Aushärten wirkt sich insbesondere positiv auf die Elastizitätseigenschaften aus, wenn es während mehr als fünf Stunden bei Temperaturen unter 480°C angewendet wird, ohne jedoch diesen Verfahrensschritt so lange auszudehnen, dass die Korrosionsfestigkeit sich in unzulässiger Weise verringert.

Weitere Vorteile ergeben sich aus den besonderen Ausführungsformen des Bauteils, wie sie durch die Merkmale der abhängigen Patentansprüche beschrieben sind.

Nach dem erfinderischen Verfahren hergestellte, elastisch verformbare Bauteile, wie sie durch die Vorrichtungsansprüche charakterisiert sind, eignen sich insbesondere für die Verwendung in Präzisionsgeräten. So können sie in Wandlern eingesetzt werden, welche den weitestgehend linearen Zusammenhang zwischen Kraft und Weg bzw. Spannung und Deformation ausnützen, um einen Messwert zu liefern. Oder sie können in einer Lenkungsvorrichtung zum Einsatz kommen, wo eine Bewegung in mehreren Freiheitsgraden eingeschränkt, in den anderen aber völlig unbehelligt sein soll. Oder sie werden in einem Präzisionsgerät als Dünnstelle eingesetzt bei der Ausgestaltung eines Koppelelements zur definierten Krafteinleitung oder eines Lagerelements zur definierten Verschwenkung. In einer präzisen Waage kann jede der genannten Verwendungen einzeln oder in Kombination vorkommen.

Details der Erfindung gehen aus der nachfolgenden Beschreibung hervor, die sich auf das Beispiel der Lastzellen von genauen Waagen stützt und Bezug nimmt auf folgende Figuren:
- Figur 1:: Parallellenker mit Biegelagern
- Figur 2:: Detail des Biegelagers
- Figur 3:: Lastzelle
- Figur 4:: Temperatur-Zeit-Diagramm mit dem Grenzverlauf für das thermische Aushärten.
- Figur 5:: Schema einer blockierten Versetzung
- Figur 6:: Schema einer Suzuki-Wolke
- Figur 7:: Prinzipskizze einer Analysenwaage

Im Rahmen der erfinderischen Bemühungen, ein korrosionsbeständiges, nicht magnetisches Bauteil zu schaffen, das überdies die gewünschten elastischen Eigenschaften in sich vereinigt, wurde Folgendes erwogen: Es ist bekannt, dass das mechanische Hysterese-Verhalten der martensitischen und ferritischen Legierungen vorwiegend auf magneto-elastische Effekte und die Blochwandreibung im Kristallgefüge zurückzuführen ist. Eine Verkleinerung der Hysterese lässt sich mit einer Verankerung der Blochwände erreichen, was aber schwierig zu bewerkstelligen ist, ohne das Kriechverhalten und die Korrosionsfestigkeit zu verschlechtern. Eine weitere Möglichkeit besteht darin, die Blochwände durch Anlegen eines Magnetfeldes zum Verschwinden zu bringen, was aber ebenfalls schwierig und ziemlich aufwendig ist, wenn dies mit hoher Zuverlässigkeit und ohne markante Zunahme des magnetischen Streufeldes geschehen soll. Eine dritte Möglichkeit umgeht das Problem, indem zum vornherein ein Stahl verwendet wird, der keine störenden Blochwände aufweist: ein austenitischer, nicht rostender Stahl, der paramagnetisch mit sehr kleiner Permeabilität, also praktisch nicht magnetisch ist. Diesem haftet aber der Nachteil an, anelastisch und nicht kriechfest zu sein. (Anelastizität äussert sich darin, dass unter bleibender Last die Verformung mit der Zeit zunimmt, nach Entlastung jedoch nach vergleichbarer Zeit wieder verschwindet, Kriechen in der irreversibel verbleibenden Verformung). Bei Raumtemperatur können binnen Minuten Deformationen in der Grössenordnung von 5·10⁻⁴ bis 10⁻² auftreten. Kleine Anelastizität und vernachlässigbares Kriechen sind aber Eigenschaften, die auch für andere sensible Bauteile in einem Präzisionsgerät, wie es zum Beispiel eine genaue Waage darstellt, von Bedeutung sind.

Dem erfindungsgemässen elastisch verformbaren Bauteil wird eine bis -20°C stabil austenitische, nicht rostende Metallegierung, bevorzugt eine Stahllegierung, zu Grunde gelegt, die weitestgehende Magnet- und Hysteresefreiheit garantiert. Die bezüglich Anelastizität und Kriechverhalten unbefriedigenden Eigenschaften dieses Ausgangsmaterials sind durch eine spezielle erfinderische Behandlung drastisch verbessert.

Ein Beispiel für ein geeignetes Ausgangsmaterial ist ein stickstofflegierter, austenitischer, nicht rostender Stahl, wie er handelsüblich zum Beispiel unter der Bezeichnung "18-18 Plus" erhältlich ist, oder in einer ähnlichen, je nach vorrangig angestrebter Eigenschaft optimierten Zusammensetzung. Das Material kann in Form von Profilstangen, Platten, Blechen, oder wie sie sonst für die weitere Verarbeitung als geeignet erscheint, bezogen werden. Die Legierung weist einen Anteil von 17 bis 19 % Chrom und ebensoviel Mangan, 0,4 bis 0,6 % Stickstoff und höchstens 0,15 % Kohlenstoff auf. Ausserdem enthält sie ca. 1 % Molybdän und bis zu 2 % Kupfer. Wahlweise können weitere Legierungsbestandteile wie Nb, V, W, Ti, Ta, Zr, Al, B mit einem Anteil von mehr als 0,05 % beigemengt werden, sei es um die Ausscheidungsbildung zu beeinflussen, sei es um die Korrosionsfestigkeit weiter zu verbessern.

Die vorstehenden Prozentangaben - wie auch die noch folgenden - beziehen sich auf Gewichtsanteile am Gesamtgewicht. Austenitische Legierungen mit anderer Zusammensetzung der Anteile sind ebenfalls geeignet. Wichtig sind ein genügender Anteil Chrom für die Korrosionsfestigkeit, Mangan für die Löslichkeit von Stickstoff bei sehr hohen Temperaturen und zusammen mehr als 0,2 % Stickstoff und Kohlenstoff, wobei der Anteil N höher sein soll als jener von C. Auch Nickel- an Stelle von Eisenlegierungen sind möglich, aus wirtschaftlichen Gründen jedoch weniger interessant. Nachfolgend wird daher die Erfindung am Beispiel der Stahllegierunng erläutert.

Die Matrix - das ist das Material, wie es in gleichartiger Zusammensetzung und Kristallstruktur zum überwiegenden Teil vorliegt, also in Bereichen ohne Konzentrationsgefälle der Bestandteile (Einschlüsse, Ausscheidungen und ähnliches) oder Gitterstörungen - des nicht rostenden Stahls muss vollständig austenitisch sein. Um ihn zu homogenisieren und Ausscheidungen aufzulösen wird er mit Vorteil bei einer Temperatur zwischen 1050 und 1250°C geschmiedet und warmgewalzt, als Rohling je nach Dicke während 10 bis 60 Minuten zwischen 1050 und 1150°C lösungsgeglüht und mit mehr als 50°C pro Minute auf unter 500°C abgeschreckt, um so den kritischen Bereich der Korrosionsanfälligkeit um 700 bis 900°C herum zu vermeiden. Diese Behandlung beseitigt allfällige Überreste von Martensit, Ferrit oder Chrom/Eisen/Mangan-Nitriden, welche nach dem Abkühlen der Schmelze noch vorhanden wären, und hält gleichwohl die Korrosionsfestigkeit aufrecht.

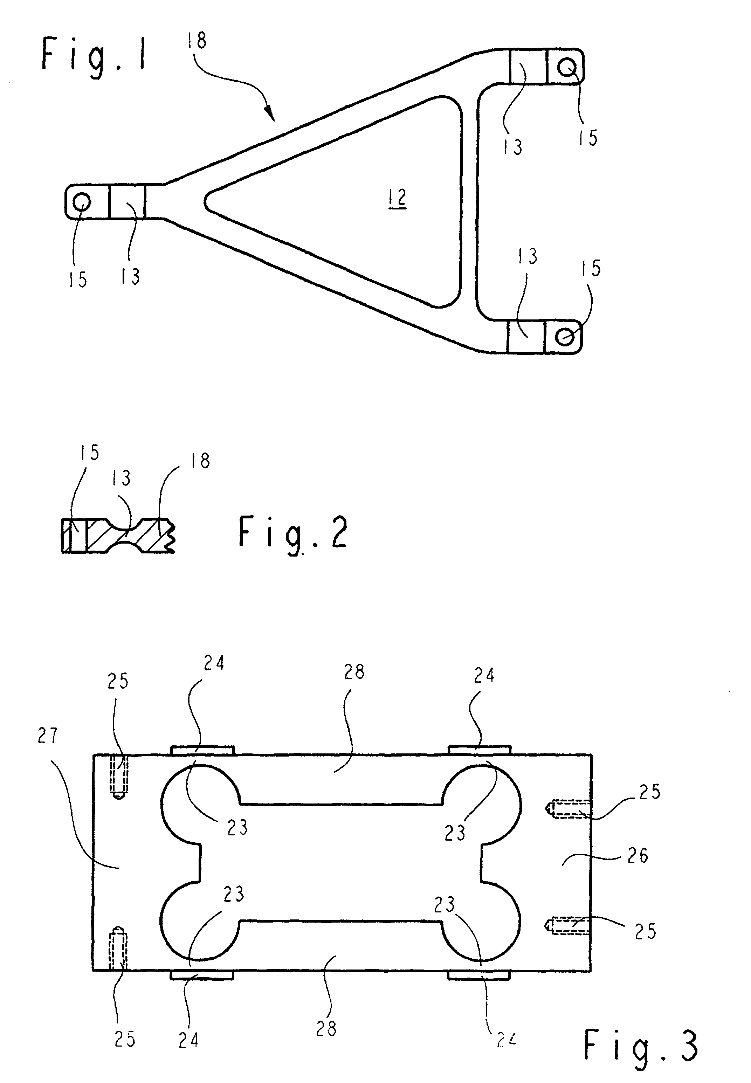

Aus dem angelieferten Material wird mit herkömmlichen Bearbeitungsvorgängen wie schneiden, stanzen, fräsen, drehen usw. ein Werkstück erzeugt. Dieses wird einer Feinformung unterzogen, welche zumindest eine mechanische Oberflächenbearbeitung oder eine Kaltverformung oder beides einschliesst, woraus die endgültige Form des Bauteils entsteht. Die Formung des Bauteils aus dem angelieferten Material kann aber auch in einem einzigen Arbeitsgang erfolgen. Die Figur 1 zeigt als Beispiel in einer Ansicht von oben den einen Lenker 18 einer Parallelführung für einen Lastträger in einer Waage. Das dreieckförmige Gebilde weist eine Ausnehmung 12 und drei Befestigungslöcher 15 auf. Das Ganze kann in einem Arbeitsgang aus einem Blech ausgestanzt werden. Der Stempel kann so gestaltet sein, dass bereits in diesem Arbeitsgang eine Formung an den drei Stellen der Biegelager 13 erfolgt. In einem nächsten Arbeitsschritt werden die Biegelager 13 durch Walzen geformt. Die Feinformung kann allenfalls durch eine Oberflächenbearbeitung wie etwa Sandstrahlen ergänzt werden. Die Figur 2 zeigt eine der Dünnstellen im Querschnitt. Man erkennt das Befestigungsloch 15 und das Biegelager 13, das zum restlichen Teil des Lenkers 18 überleitet. Selbstverständlich können die Biegelager auch als Einzelteile angefertigt und in geeigneter Weise mit der restlichen Struktur eines Lenkers verbunden werden. Die einzelnen Biegelager können ausserdem in anderer Funktion als Schwenklager oder Koppelelemente ein einem Gerät verwendet werden.

Die hohe Beanspruchung des Materials, wie sie im obigen Beispiel bei der Formung der Dünnstellen erfolgt, kann auch bereits bei der Herstellung des Werkstücks auftreten. Ein Beispiel dafür ist die in der Figur 3 in Seitenansicht gezeigte Lastzelle 21. Sie besteht im wesentlichen aus dem zu fixierenden Teil 26 mit Befestigungslöchern 25, dem die Last aufnehmenden Teil 27, ebenfalls mit Befestigungslöchern 25, und den dazwischen liegenden Parallellenkern 28. Die engen Verbindungsstellen 23 wirken hier sowohl als Lager als auch als Federn, deren Auslenkungen mittels Dehnungsmessstreifen 24 erfasst werden. Die Zelle wird aus Stangenmaterial mit einem Rechteckprofil gefertigt. Der Rohling wird zunächst um typisch 1 bis 2 % oder mehr gereckt, also plastisch verformt, um allfällige Verwindungen zu beseitigen. Die form- und funktionsbestimmende Ausnehmung 22 wird durch bohren und/oder fräsen erhalten. Die Aussenflächen werden zumindest an den Verbindungsstellen 23 ebenfalls spanabhebend bearbeitet. Diese Bearbeitung hat eine plastische Verformung zur Folge, die an der Oberfläche am grössten ist und mit zunehmender Tiefe abnimmt. Damit sind an der Oberfläche, wo im Einsatz der Lastzelle die grösste Beanspruchung auftritt, die besten Voraussetzungen bezüglich der elastischen Eigenschaften geschaffen.

Die Oberflächenbearbeitungen bewirken lokal bis in eine Tiefe von mindestens 50 µm eine bleibende Verformung, die bevorzugt mehr als 10 % beträgt. Bei Kaltverformung - dazu gehören schmieden, walzen, prägen, tiefziehen, biegen und so fort - ist meist der ganze Querschnitt an der betreffenden Stelle des Bauteils betroffen. Die Kalthärtung bewirkt eine Erhöhung der Versetzungsdichte und damit der Fliess- oder Streckspannung. Sie wird daher zumindest an Stellen angewendet, an welchen das Bauteil in seinem späteren Einsatz am meisten belastet wird, in den Beispielen eben an den Dünnstellen. Die Kalthärtung erhöht die Versetzungsdichte und schafft so die Voraussetzungen für eine leichtere Atom-Diffusion - vor allem der Zwischengitteratome - während der später nachfolgenden thermischen Aushärtung.

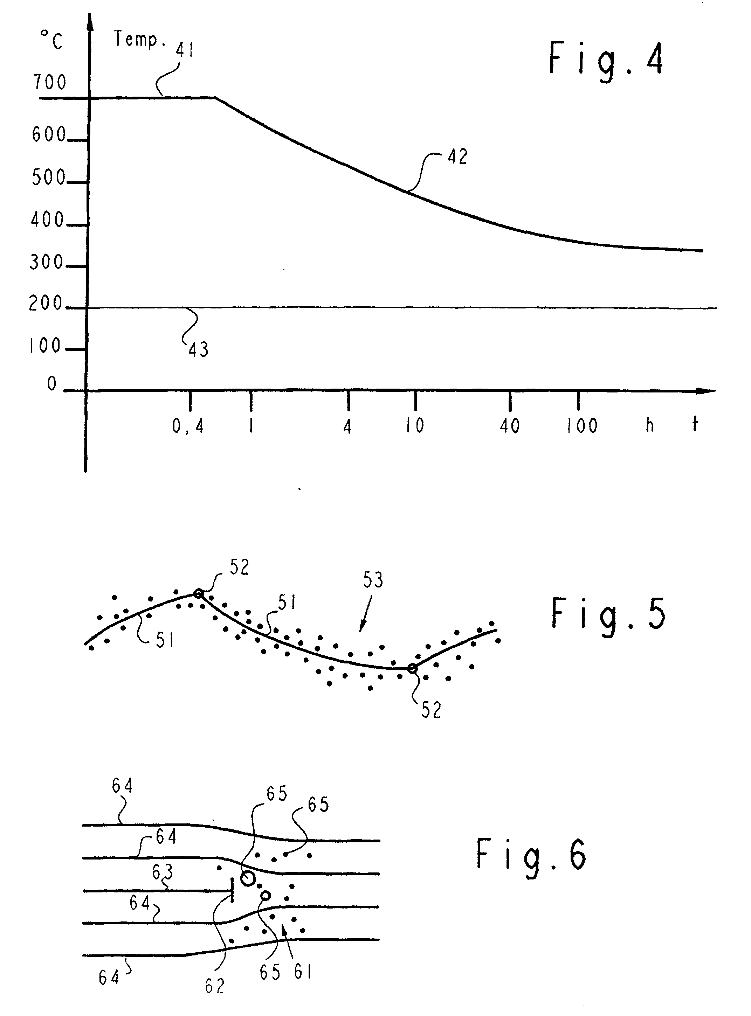

Bei der abschliessenden thermischen Behandlung findet eine Ausscheidungshärtung des fertig geformten Bauteils statt, welche die elastischen Eigenschaften verbessert, das heisst in erster Linie die Anelastizität vermindert und das Kriechen nahezu verschwinden lässt. Dabei ist jedoch zum vornherein darauf zu achten, dass die Korrosionsfestigkeit nicht verloren geht. Die Figur 4 zeigt im Temperatur-Zeit-Diagramm die Grenzen für das thermische Aushärten. Die obere Temperaturgrenze 41 liegt bei 700°C. Darüber können sich in kurzer Zeit unkontrollierbar grobe Ausscheidungen bilden. Bei darunter liegenden Temperaturen lässt sich der Prozess gezielt fahren. Im oberen Bereich begünstigt die noch immer relativ hohe Temperatur die Bildung von Nitriden und in diesem Temperaturbereich diffundiert Chrom besser. Bei zu lange dauernder Behandlung besteht damit die Gefahr, dass sich Chrom rund um die Ausscheidungen konzentriert und in deren Umfeld der Chromanteil in der Matrix unter 11 % sinkt, so dass diese Stellen korrosionsanfällig werden. Es gilt daher eine reziprok verlaufende Begrenzung 42 zu beachten. Für rechts oberhalb der Kurve liegende Behandlungstemperaturen und -zeiten ist die Korrosionsfestigkeit nicht mehr gewährleistet. Die Begrenzung 42 ist zusammen mit den angegebenen Werteskalen als repräsentatives Beispiel zu verstehen, nicht als absolute Grenze, ist doch die Lage im Diagramm und- in vermindertem Masse - der Verlauf im Einzelfall von der Materialzusammensetzung abhängig. Unter einer gewissen Mobilitätsgrenze 43, welche bei ungefähr 200°C liegt, findet innert nützlicher Frist praktisch keine Diffusion mehr statt und es gibt keine wesentlichen Gefügeänderungen mehr. Die thermische Aushärtung findet daher im Bereich zwischen 700 und 200°C statt, bevorzugt unter 480°C und während mehr als 5 Stunden, um grosse Differenzen in der Chromkonzentration zu vermeiden.

Generell gilt, dass sich im zur Verfügung stehenden Zeit-Temperatur-Bereich die elastischen Eigenschaften mit anhaltender Behandlung verbessern, bis eine optimale Zeit überschritten ist. Je höher die Behandlungstemperatur liegt, um so kürzer ist die genannte Zeit. Längerdauernde Behandlungen mit niedriger Temperatur führen insgesamt zu besseren Ergebnissen als kürzerdauernde mit höheren Temperaturen. Eine zu lange dauernde Wärmebehandlung mit einer gewissen Temperatur ergibt grössere Ausscheidungen im Gefüge und damit Versetzungen, welche sich wegen der grösseren Ausscheidungsabstände unter Beanspruchung besser bewegen können, was sich auf die angestrebten elastischen Eigenschaften negativ auswirkt.

Welch besondere Vorteile ein optimiertes Vorgehen gemäss dem erfinderischen Verfahren bringt, zeigt das nachstehende Beispiel. Als Ausgangsmaterial dient ein normierter legierter Stahl DIN 1.3816, ein Austenit mit gegen 20% Mn, gegen 20% Cr, weniger als 0,12% C und 0,4 bis 0,7% N, der bei 1100°C während 45 Minuten lösungsgeglüht und in Wasser abgeschreckt wurde. Die anschliessende Aufbereitung in eine für die Lagerung und Auslieferung geeignete Form hat eine Kaltverformung von 5% zur Folge, das heisst, das Material wird in einer Richtung bleibend 5% länger. Mit dem anschliessenden Fräsen und Bohren des Werkstücks ergibt sich bis in eine Tiefe von mindestens 50 µm unter der Oberfläche eine plastische Verformung von 10%. Wird ein solches Material während einer halben Stunde einer Belastung ausgesetzt, welche eine Spannung von 250 MPa bewirkt, stellt man eine Anelastizität von 450 bis 1500 ppm fest, das heisst, die Dehnung des Materials weicht bis zu 1,5 Promille vom linearen Verlauf ab. Die Hysterese beträgt 1600 bis 4700 ppm, das heisst, bei kurzzeitigem Belasten auf die Spannung von zunächst 125 MPa, dann 250 MPa und dann wieder zurück auf 125 und 0 MPa liegen die Dehnungswerte bei den Spannungen von 125 MPa um bis zu 4,7 Promille auseinander. Schliesst hingegen an das Bearbeiten eine thermische Behandlung mit 345°C während 20 Stunden an, so reduzieren sich die Anelastizität und die Hysterese drastisch auf 150 bis 180 ppm bzw. 140 bis 220 ppm. Wird das so hergestellte Bauteil bestimmungsgemäss eingesetzt und die maximale Spannung auf 125 MPa begrenzt, so liegt die Anelastizität unter 130 ppm und die Hysterese beträgt weniger als 95 ppm.

Die beiden Schritte des Kalthärtens und des thermischen Aushärtens erlauben es also, das Bauteil mit den gewünschten, speziellen Eigenschaften herzustellen. Dabei ist der letzte Schritt im Stand der Technik unüblich, besteht doch die Gefahr, dass dabei die Korrosionsfestigkeit verloren geht, wie gezeigt jedoch nur, wenn der Stahl zu lange, insbesondere bei höheren Temperaturen im noch zulässigen Bereich, gealtert wird. Die Gefahr wird weiter reduziert, wenn ein genügend hoher Anteil an Stickstoff im Vergleich zu Kohlenstoff vorhanden ist. Es bleibt dem fachmännischen Können überlassen, für die jeweilige Legierung und die Form des Bauteils die adäquate Kaltbearbeitung und darauf abgestimmt die abschliessende Wärmebehandlung zu wählen, um das für seinen Bedarf optimale Resultat zu erzielen.

Die Verbesserung der elastischen Eigenschaften rührt von einer Nanostruktur mit blockierten Versetzungen her. Der hier verwendete Begriff der Nanostruktur geht zurück auf die Mikrostruktur kristalliner Materialien, wie sie in der Literatur umfassend charakterisiert ist, zum Beispiel in Cahn R. W. und Haasen P., Ed.: "Physical Metallurgy", 4. Ausgabe, 1996, Elsevier Science B.V. Amsterdam, Vol. 1, Kapitel 9; sie ist definiert durch Typus, Struktur, Anzahl, Form und topographische Anordnung von Phasen und/oder Gitterstörungen, die in den meisten Fällen nicht Teil der Struktur im thermodynamischen Gleichgewicht sind. Eine Nanostruktur ist eine Mikrostruktur bestehend aus einer polykristallinen Matrix und mindestens einer Sorte von darin fein verteilten Bestandteilen. Die Kristalle können in einem Schliff durch geätzte Korngrenzen sichtbar gemacht werden. Die fein verteilten Bestandteile weisen Dimensionen und mittlere Abstände zueinander auf, die im Nanometerbereich liegen, also in der Grösse von einem bis eintausend Nanometer. Folgende Sorten von fein verteilten Bestandteilen werden unterschieden: Anders geartete Phasen in Form von keramischen und/oder intermetallischen Ausscheidungen, Ansammlungen von Zwischengitteratomen - wie etwa C und N - um Versetzungen herum, sogenannte Suzuki-Wolken, und Zonen mit Konzentrationsschwankungen der chemischen Zusammensetzung wie Seigerungen, spinodale Entmischungen und Diffusionsgradienten. Die polykristalline Matrix weist inhärent Versetzungen auf, das sind lineare Unregelmässigkeiten im Gitter. Unter Spannung im Material besteht die Tendenz, dass Versetzungen in der Kristallstruktur irreversibel bewegt werden. Die fein verteilten Bestandteile blockieren die Versetzungen und verhindern so deren irreversible Verschiebung bis zu Spannungen von mindestens einem Viertel der Streckgrenze, die bis über 1,0 GPa liegen kann. Bei Anwendung höherer Temperaturen während des thermischen Aushärtens können ferner komplexe intermetallische Ausscheidungen wie die sogenannten Laves-Phasen entstehen.

Die Figur 5 zeigt schematisch die Blockierung der Versetzungen 51, die sich hauptsächlich zwischen grösseren Ausscheidungen 52 bzw. Phaseneinschlüssen mit anderer Kristallstruktur erstrecken, durch die Nanostruktur 53 von Bestandteilen in unterschiedlicher Konzentration, Suzuki-Wolken oder/und Ausscheidungen im Nanometerbereich. Die Figur 6 zeigt schematisch eine Suzuki-Wolke 61 an einer Versetzung 62. Die Atomebene 63 bricht an dieser Stelle ab, die weiteren Atomebenen 64 verlaufen entsprechend und haben erst in einiger Distanz von der Versetzung 62 wieder einen regulären Verlauf. Im Bereich der Versetzung 62 mit dem gestörten Kristallgitter ist Raum für Zwischengitter-Atome. Diese Einlagerungen machen die Suzuki-Wolke 61 aus.

Ein nach dem oben beschriebenen Verfahren erzeugtes Bauteil ist dank seinem hohen Chromgehalt korrosionsfest, so dass es ohne weiteres einen normierten Salzwassersprühtest besteht. Dies ist wichtig und von grossem Vorteil für den Einsatz des Bauteils in vielen industriellen Anwendungen, namentlich in der Nahrungs- und Futtermittelindustrie und der chemischen und pharmazeutischen Industrie. Der kleine Ferrit-/Martensitanteil gewährleistet minimale magnetische Permeabilität, eine unabdingbare Eigenschaft für die Verwendung in Präzisionsgeräten für die Kraftmessung. Die gleichwohl überragenden elastischen Eigenschaften sind extrem kleine Anelastizität und kaum messbares Kriechen sowie praktische Hysteresefreiheit.

Zwischengitteratome verstärken die Matrix und erhöhen die Festigkeit des kristallinen Gefüges. Als Zwischengitteratome eignen sich in erster Linie Stickstoff und in vermindertem Masse Kohlenstoff. Aber auch Bor, Beryllium und Lithium kommen dafür in Frage, also Element mit einer Ordnungszahl von 3 bis 7 im Periodischen System. Enthält das Bauteil einen Anteil von mindestens 0,2 % Zwischengitteratome, macht sich die Verstärkung bemerkbar. Bevorzugt wird ein Anteil von mehr als 0,4 % Stickstoff und Kohlenstoff verwendet, wobei der Anteil an Stickstoff überwiegt. Der Stickstoff ist mitbestimmend für die Ausscheidungen bei der Wärmebehandlung und ergibt bessere Voraussetzungen für die Bildung der Nanostruktur im Härtungsprozess. Zur besseren Bindung des relativ hohen Anteils an Stickstoff trägt ein hoher Mangangehalt bei.

Zusätzliche karbid-, karbonitrid- oder nitridbildende Elemente von mehr als 0,05 % im Ausgangsmaterial vermögen das Kornwachstum während der Lösungsglühbehandlung zu vermindern und tragen zur Entstehung der Nanostruktur bei. Überdies erhöhen sie die Fliessspannung und die Endfestigkeit. Bevorzugt werden die Karbidbildner Niob oder Vanadium oder beide zugleich verwendet. Weiter kommen dafür Titan, Tantal, Wolfram und Zirkon in Frage. Zum Beispiel können aus Titan die Verbindungen TiN, TiC, Tiₓ(CN)_{y} entstehen.

Bauteile, welche Zwischengitteratome enthalten und entsprechend behandelt wurden, weisen ein Kristallgefüge mit einer Nanostruktur auf, welche für eine stabile Verankerung der Versetzungen sorgt. Enthalten sie ausserdem Karbid-, Karbonitrid- oder Nitridbildner, wird die Nanostruktur günstig beeinflusst, insbesondere bezüglich der Stabilisierung der Suzuki-Wolken. Durch die Kalthärtung und eine relativ lange Endwärmebehandlung bei niedriger Temperatur wird sichergestellt, dass die Nanostruktur nicht zu grob wird.

Ein weiterer Vorteil ergibt sich, wenn das Bauteil einen Anteil von mehr als 0,2 % Kupfer enthält. Cu hemmt das Entstehen von Martensit unter der starken Beanspruchung während des Kalthärtens bis hin zur plastischen Verformung. Es setzt ferner die Löslichkeit von Stickstoff während des thermischen Aushärtens, also bei relativ tiefen Temperaturen, herab und beschleunigt so die Ausscheidung von Nitriden. Weiter begünstigt es bei höheren Alterungstemperaturen die Bildung komplexer intermetallischer und Laves Phasen. Weiter erhöht es die Korrosionsfestigkeit durch Passivierung.

Mit den geschilderten Massnahmen lässt sich der Ferritund/oder Martensit-Anteil fast beliebig klein halten und damit auch die Permeabilität, ist doch austenitischer Stahl nicht magnetisch. Ein Bauteil gemäss der Erfindung kann daher mit einer relativen Permeabilität von weniger als 1,004 bei einer Magnetfeldstärke von 80 A/cm geschaffen werden, einer verbreiteten Anforderung an nicht magnetische, metallische Gegenstände.

Eine lokal sehr starke, bleibende Verformung von mehr als 10 % der Kaltbearbeitung kann bei gewissen Legierungen als unerwünschten Nebeneffekt an diesen Stellen den Ferrit-/Martensit-Anteil und damit die Permeabilität erhöhen. Bei genügend hohem Anteil an Stickstoff, begünstigt durch einen hohen Mangangehalt, und etwas Kupfer ist der Effekt jedoch kaum merklich. Hingegen sind die Kriecheigenschaften deutlich besser. Durch die starke Verformung bis in eine Tiefe von mindestens 50 µm ergeben sich insbesondere an dünnen Stellen des Bauteils hervorragende elastische Eigenschaften, ohne dass die gesamthaft angestrebten Vorzüge verloren gingen.

Elastisch verformbare Bauteile mit den genannten hervorragenden Eigenschaften können für Wandler zum Messen von Masse, Gewicht, Kraft, Drehmoment, Winkel oder Weg eingesetzt werden, also überall dort, wo der lineare, reproduzierbare, hysteresefreie Zusammenhang zwischen Spannung und Dehnung an einem Bauteil ausgenützt wird, um eine der Grössen abzubilden. Dazu gehören insbesondere Lastzellen ausgerüstet mit kapazitiven oder piezoelektrischen Sensoren, Dehnungsmessstreifen, Resonatoren oder ähnlichem. Es lassen sich damit für Spannungen bis über 0,3 GPa bei Zimmertemperatur Genauigkeiten von 10 ppm erreichen.

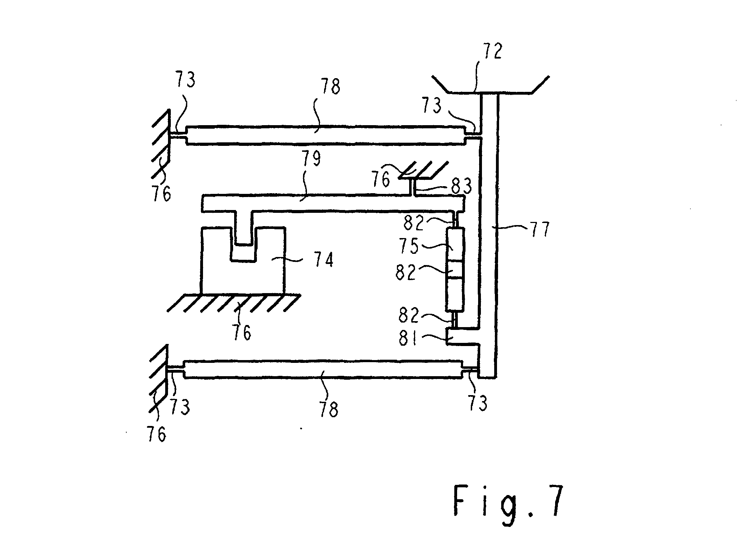

Eine weitere Verwendung des erfinderischen Bauteils ist dessen Einsatz in einer mechanischen Lenkungsvorrichtung in einem Präzisionsmessgerät, wie zum Beispiel einer Parallelführung in einer Analysewaage. Besonders geeignet ist das elastisch verformbare Bauteil auch in Form einer Dünnstelle als Koppel- oder Lagerelement in einem Präzisionsgerät. Die Figur 7 zeigt die Prinzipskizze einer Analysewaage mit elektromagnetischer Kraftkompensation. Die Waage 71 weist eine Parallelführung zur Lenkung des Lastträgers 72 auf, gebildet durch die Lenker 78, die über Biegelager 73 einerseits an der Konsole 76 und andererseits am Gehänge 77 befestigt sind. Die Biegelager 73 sind verwindungssteif, so dass das Gehänge sich nur in vertikaler Richtung bewegen kann. Ein auf den Lastträger 72 aufgelegtes Gewicht wird über die Lasche 81 am Gehänge 77 durch den Zugkoppel 75 auf den Hebel 79 zur Übersetzung der Gewichtskraft übertragen, der seinerseits über ein Lagerelement 83 verschwenkbar an der Konsole 76 gelagert ist. Der Zugkoppel weist Koppelelemente 82 in Form von Dünnstellen auf, welche eine eindimensionale Krafteinleitung in vertikaler Richtung garantieren. Die übersetzte Gewichtskraft am Hebel 79 wird kompensiert durch die an der Konsole 76 befestigte Vorrichtung zur elektromagnetischen Kraftkompensation 74. Alle beschriebenen Komponenten der Waage lassen sich aus erfindungsgemässen elastisch verformbaren Bauteilen herstellen. Besonders vorteilhaft ist deren Verwendung als Biegelager 73, Koppelelemente 82 und Lagerelement 83, aber auch die ganze Parallelführung mit den Lenkern 78, der ganze Koppel 87 sowie der Hebel 79 werden mit Vorteil als elastisch verformbares Bauteil aus demselben Material hergestellt.

Dank der hohen Korrosionsfestigkeit benötigen die Bauteile keine Beschichtung oder sonstige Oberflächenbehandlung. Das Fehlen einer solchen schliesst von vornherein eine mögliche Beeinträchtigung der elastischen Eigenschaften aus und erleichtert die Handhabung während der Herstellung und im Gebrauch.

## Patentansprüche

1. Elastisch verformbares Bauteil für eine Messeinrichtung, in der das Bauteil mechanischen Spannungen ausgesetzt wird, bestehend aus einer austenitischen, zwischengitteratomhaltigen Metallegierung mit einem Ferrit- und/oder Martensit-Anteil von weniger als zwei und einem Chromgehalt von mehr als elf Gewichtsprozent, deren Kristallgefüge eine Nanostruktur (53) mit blockierten Versetzungen (51) aufweist.

2. Bauteil nach Anspruch 1 mit einem Gewichtsanteil von mehr als 0,2 % Zwischengitteratomen mit einer Ordnungszahl zwischen 3 und 7 im Periodischen System der Elemente.

3. Bauteil nach Anspruch 2 mit einem Gewichtsanteil von gesamthaft mehr als 0,4 % Stickstoff und Kohlenstoff, wobei der Anteil an Stickstoff höher ist als jener an Kohlenstoff.

4. Bauteil nach Anspruch 2 oder 3 mit mindestens einem zusätzlichen karbid-, karbonitrid- oder nitridbildenden Element von gesamthaft mehr als 0,05 Gewichtsprozent.

5. Bauteil nach Anspruch 4 mit Niob oder/und Vanadium als zusätzlichem Element.

6. Bauteil nach einem der Ansprüche 2 bis 5, worin das Kristallgefüge Suzuki-Wolken (61)oder Suzuki-Wolken und Nitride, Karbide oder Karbonitride im Nanometerbereich aufweist.

7. Bauteil nach einem der vorstehenden Ansprüche mit einem Anteil Kupfer von mehr als 0,2 Gewichtsprozent.

8. Bauteil nach einem der vorstehenden Ansprüche mit einem Ferrit- und/oder Martensit-Anteil der so klein ist, dass die relative Permeabilität bei einer Magnetfeldstärke von 80 A/cm kleiner als 1,004 ist.

9. Bauteil nach einem der vorstehenden Ansprüche mit zumindest stellenweise von Kaltbearbeitung herrührender, bleibender Verformung um mindestens 10 % in den ersten 50 µm unter der Oberfläche.

10. Wandler (21) zum Messen von Masse, Gewicht, Kraft, Drehmoment, Winkel oder Weg mit einem elastisch verformbaren Bauteil nach einem der Ansprüche 1 bis 9.

11. Mechanische Lenkungsvorrichtung (18), in einem Präzisionsmessgerät mit einem elastisch verformbaren Bauteil nach einem der Ansprüche 1 bis 9.

12. Koppelelement (82) in einem Präzisionsgerät zur definierten Krafteinleitung über eine Dünnstelle, welche durch ein elastisch verformbares Bauteil nach einem der Ansprüche 1 bis 9 gebildet wird.

13. Lagerelement (13, 83) in einem Präzisionsgerät zur definierten Verschwenkung an einer Dünnstelle, welche durch ein elastisch verformbares Bauteil nach einem der Ansprüche 1 bis 9 gebildet wird.

14. Waage (71) mit mindestens einem elastisch verformbaren Bauteil nach einem der Ansprüche 1 bis 9 in einer oder mehreren der Verwendungsarten gemäss den Ansprüchen 10 bis 13.

15. Verfahren zur Herstellung eines elastisch verformbaren Bauteils nach einem der Ansprüche 1 bis 9 mit folgenden Verfahrensschritten, ausgehend von einer zwischengitteratomhaltigen, nicht rostenden, austenitischen Metallegierung, die lösungsgeglüht und abgeschreckt wurde:
- Formen des Bauteils aus besagter Metallegierung unter Anwendung einer zumindest lokal eine Kalthärtung bewirkenden mechanischen Beanspruchung
- Thermisches Aushärten in einem Temperaturbereich von 200 bis 700°C.

16. Verfahren nach Anspruch 15, wobei das Formen an ausgewählten Stellen des Bauteils eine plastische Deformation von mindestens 10 % bis in eine Tiefe von mindestens 50 µm unter der Oberfläche bewirkt.

17. Verfahren nach Anspruch 15 oder 16, wobei das thermische Aushärten bei weniger als 480°C erfolgt und länger als 5 Stunden dauert.

18. Verfahren nach Anspruch 15 oder 16, wobei die Metallegierung ein stickstoffhaltiger Chrom-Mangan-Stahl ist und das Aushärten bei einer Temperatur um 345°C gegen 20 Stunden dauert.

19. Verfahren nach Anspruch 15, **dadurch gekennzeichnet, dass** die Metallegierung einen Gewichtsanteil von mehr als 0,2% Zwischengitteratome mit einer Ordnungszahl zwischen 3 und 7 im Periodischen System der Elemente aufweist, bevorzugt gesamthaft mehr als 0,4% Stickstoff und Kohlenstoff, wobei der Anteil an Stickstoff höher ist als jener an Kohlenstoff.

## Claims

1. An elastic component for a measuring device in which the component is subjected to mechanical stress, consisting of an austenitic metal alloy that includes interstitial atoms, contains in proportion to its total weight less than two percent ferrite and/or martensite, and more than eleven percent chromium, and has a crystalline texture with a nano-structure (53) with blocked dislocations (51).

2. The component according to claim 1, comprising in proportion to its total weight a content of more than 0.2% interstitial atoms with an atomic number ranging from 3 to 7 in the periodic system of elements.

3. The component according to claim 2, comprising in proportion to its total weight a combined content of more than 0.4% nitrogen and carbon, with nitrogen making up a greater share than carbon.

4. The component according to claim 2 or 3, comprising in proportion to its total weight a combined content of more than 0.05% of at least one additional element from the group of elements that will form carbide, carbonitride and nitride compounds.

5. The component according to claim 4, comprising Niobium or/and Vanadium as the at least one additional element.

6. The component according to any one of the claims 2 through 5, wherein the crystalline texture comprises Suzuki clouds (61) or Suzuki clouds and nitrides, carbides, or carbonitrides in the nanometer range.

7. The component according to any one of the preceding claims, comprising in proportion to its total weight a content of more than 0.2% copper.

8. The component according to any one of the preceding claims, wherein the content of ferrite and/or martensite is so small that the relative permeability is less than 1.004 at a magnetic field strength 80 A/cm.

9. The component according to any one of the preceding claims, comprising at least local portions which, as a result of cold working, have a permanent strain deformation of at least 10% in the first 50 µm below the surface.

10. A transducer (21) used for measuring mass, weight, force, torque, angle or displacement incorporating an elastic component according to any one of the claims 1 through 9.

11. A mechanical motion-guiding device (18) in a precision measuring instrument incorporating an elastic component according to any one of the claims 1 through 9.

12. A coupling element (82) in a precision instrument to effect a defined force introduction through a portion of reduced thickness incorporating an elastic component according to any one of the claims 1 through 9.

13. A pivot element (13, 83) in a precision instrument to effect a defined rotational mobility at a portion of reduced thickness incorporating an elastic component according to any one of the claims 1 through 9.

14. A balance incorporating at least one elastic component according to any one of the claims 1 through 9 in a single or a plurality of uses according to any one of the claims 10 to 13

15. A process for manufacturing an elastic component according to any one of the claims 1 through 9 from a non-corroding, austenitic metal alloy containing interstitial atoms that has been solution heat treated and quenched, comprising the steps of
- shaping the component from the metal alloy, which involves application of mechanical stress that causes cold-hardening at least in localized portions, and
- thermal hardening in a temperature range from 200°C to 700°C.

16. The process according to claim 16, wherein the shaping causes a plastic deformation of at least 10% to a depth of at least 50µm at selected locations on the component.

17. The process according to claim 15 or 16, wherein the thermal hardening is performed at a temperature below 480°C for more than 5 hours.

18. The process according to claim 15 or 16, wherein the metal alloy is a nitrogen-containing chromium-manganese steel and the thermal hardening is performed at a temperature around 345°C for close to 20 hours.

19. The process according to claim 15, **characterized in that** the metal alloy has a weight proportion of more than 0.2% interstitial atoms with an atomic number between 3 and 7 in the periodic table of elements, and preferably a combined total of more than 0.4% nitrogen and carbon, with a greater proportion of nitrogen than carbon.

## Revendications

1. Elément de construction élastiquement déformable pour un appareil de mesure, dans lequel l'élément de construction est soumis à des tensions mécaniques, comprenant un alliage de métal austénitique, contenant des atomes interstitiels, avec une fraction de ferrite et/ou de martensite inférieure à deux % en poids et une teneur en chrome supérieure à onze % en poids, dont la structure cristalline présente une nanostructure (53) avec des dislocations (51) bloquées.

2. Elément de construction selon la revendication 1, avec une fraction en poids supérieure à 0,2 % d'atomes interstitiels avec un nombre atomique compris entre 3 et 7 dans le système périodique des éléments.

3. Elément de construction selon la revendication 2, avec une fraction en poids globalement supérieure à 0,4 % d'azote et de carbone, la fraction d'azote étant supérieure à celle du carbone.

4. Elément de construction selon la revendication 2 ou 3, avec au moins un élément supplémentaire formant du carbure, du nitrure de carbone ou du nitrure qui représente globalement plus de 0,05 % en poids.

5. Elément de construction selon la revendication 4 avec du niobium et/ou du vanadium comme élément supplémentaire.

6. Elément de construction selon l'une quelconque des revendications 2 à 5, dans lequel la structure cristalline présente des nuages de suzuki (61) ou des nuages de suzuki et des nitrures, des carbures ou des nitrures de carbone dans la plage du nanomètre.

7. Elément de construction selon l'une quelconque des revendications précédentes avec une fraction de cuivre supérieure à 0,2 % en poids.

8. Elément de construction selon l'une quelconque des revendications précédentes avec une fraction de ferrite et/ou de martensite qui est si petite que la perméabilité relative est inférieure à 1,004 pour une intensité de champ magnétique de 80 A/cm.

9. Elément de construction selon l'une quelconque des revendications précédentes avec une déformation permanente, provenant au moins par endroits du traitement à froid, d'au moins 10 % dans les 50 premiers µm sous la surface.

10. Transducteur (21) pour la mesure de masse, de poids, de force, de couple, d'angle ou de course avec un élément de construction élastiquement déformable au point élastique selon l'une quelconque des revendications 1 à 9.

11. Dispositif de direction (18) mécanique, dans un appareil de mesure de précision avec un élément de construction déformable au plan élastique selon l'une quelconque des revendications 1 à 9.

12. Elément de couplage (82) dans un appareil de précision pour l'application de force définie sur un endroit mince, qui est formé par un élément de construction élastiquement déformable selon l'une quelconque des revendications 1 à 9.

13. Elément d'appui (13, 83) dans un appareil de précision pour le basculement défini en un endroit mince, qui est formé par un élément de construction élastiquement déformable selon l'une quelconque des revendications 1 à 9.

14. Balance (71) avec au moins un élément de construction élastiquement déformable selon l'une quelconque des revendications 1 à 9 dans un ou plusieurs des types d'utilisation selon les revendications 10 à 13.

15. Procédé pour la fabrication d'un élément de construction élastiquement déformable selon l'une quelconque des revendications 1 à 9 avec les étapes de procédé suivantes, en partant d'un alliage de métal austénitique inoxydable et contenant des atomes interstitiels, qui a subi un recuit de mise en solution et une trempe:
- façonnage de l'élément de construction à partir dudit alliage de métal avec application d'une contrainte mécanique entraînant au moins localement un durcissement à froid
- durcissement thermique dans une plage de températures de 200 °C jusqu'à 700 °C.

16. Procédé selon la revendication 15, le façonnage entraînant en des endroits sélectionnés de l'élément de construction une déformation plastique d'au moins 10 % jusqu'à une profondeur d'au moins 50 µm sous la surface.

17. Procédé selon la revendication 15 ou 16, le durcissement thermique s'effectuant à moins de 480 °C et durant plus de 5 heures.

18. Procédé selon la revendication 15 ou 16, l'alliage de métal étant un acier chrome-manganèse comprenant de l'azote et le durcissement durant environ 20 heures à une température de 345 °C.

19. Procédé selon la revendication 15, **caractérisé en ce que** l'alliage de métal présente une fraction en poids supérieure à 0,2 % d'atomes interstitiels avec un numéro atomique compris entre 3 et 7 dans le système périodique des éléments, de préférence globalement plus de 0,4 % d'azote et de carbone, la fraction d'azote étant supérieure à celle du carbone.
